Europäisches Patentamt

European Patent Office

Office européen des brevets

(19)

(11) Publication number: **0 265 182**

**A2**

(12) # EUROPEAN PATENT APPLICATION

(21) Application number: **87309142.5**

(22) Date of filing: **15.10.87**

(51) Int. Cl.⁴ **A01N 29/02**

---

Claim 12 is deemed to be abandoned due to non-payment of the claims fee (Rule 31 (3) EPC).

(30) Priority: **18.10.86 GB 8625021**

(43) Date of publication of application:
**27.04.88 Bulletin 88/17**

(84) Designated Contracting States:
**AT BE CH DE ES FR GR IT LI LU NL SE**

(71) Applicant: **Pal International Limited**
**Sandhurst Street**
**Oadby Leicester LE2 5LW(GB)**

(72) Inventor: **Brucciani, Richard Louis**
**19 Ashfield Road**
**Stoneygate Leicester LE2 1LB(GB)**

(74) Representative: **Hallam, Arnold Vincent et al**
**E.N. LEWIS & TAYLOR 144 New Walk**
**Leicester LE1 7JA(GB)**

(54) **Bird deterrent apparatus.**

(57) An apparatus for deterring birds comprises a carrier oscillator which is frequency modulated by a modulation oscillator (IC6), the signal being applied to a power amplifier (28) which drives a loud speaker. The oscillators are voltage controlled and their nominal frequencies are switched in a preselected manner by a binary divider (14) which controls the application of tuning voltages to the oscillators via gating circuits (IC1). A sequence generator (16) generates a random or preslected pattern of pulses which control a relay (RL1) via a trigger circuit (20) to apply power in an intermittent manner to the power amplifier (28). The result is periodic bursts of sound from the loudspeaker at frequencies and intervals which are sufficiently random to detcr birds from the surrounding area.

EP 0 265 182 A2

## Bird Deterrent Apparatus

The present invention relates to an apparatus for deterring birds from, for example, airfields, orchards, vinyards.

Known apparatus for deterring birds generate high levels of intermittent noise, the intention being that the sudden generation of high level noise will frighten away any nearby birds. While such apparatus may initially prove successful, it has been found that the birds soon get used to the intermittent sound as a result of which the apparatus rapidly loses its effectiveness.

The present invention seeks to devise an improved apparatus for deterring birds by creating an environment hostile to them.

The present invention provides an apparatus for deterring birds comprising means for generating a sound wave to provide a standing wave whose wavelength is commensurate with a dimension of the cranial cavity of a bird.

Accordingly, the present invention provides an apparatus for deterring birds comprising means for generating an alternating signal; means for varying the frequency of said signal; electro-mechanical transducer means for converting said signal into sound waves; and control means for controlling intermittent generation of said sound waves in a preselected or random manner.

The term "sound wave" as used herein is intended to mean not only those sound waves in the audible spectrum but also ultrasonic waves that birds and the like pests are capable of sensing.

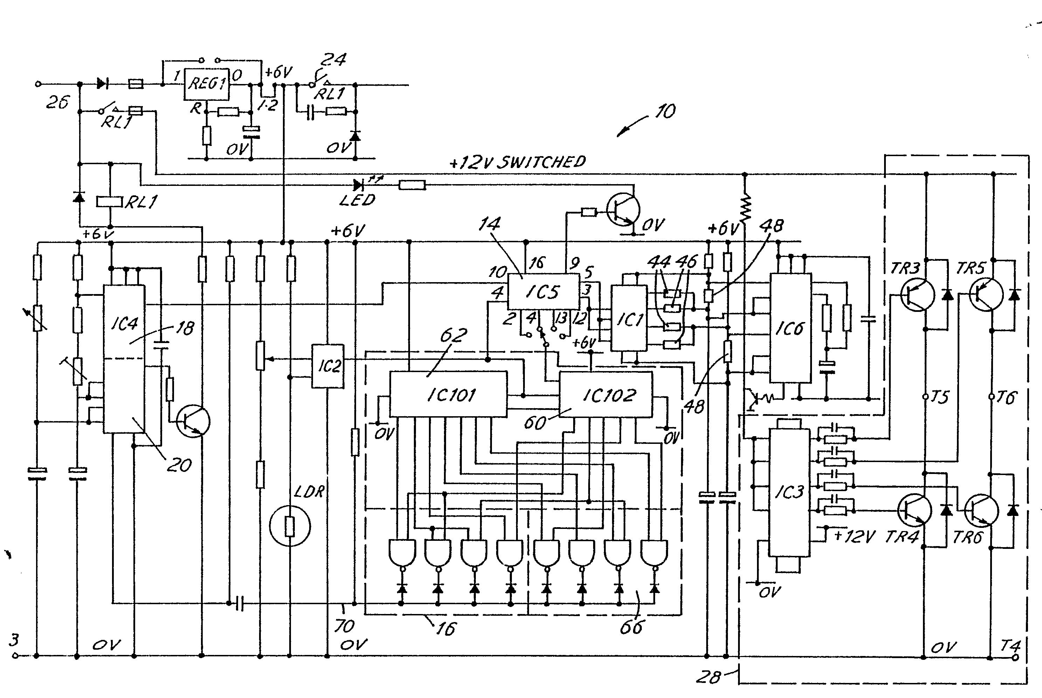

The present invention is further described hereinafter, by way of example, with reference to the accompanying drawing, which is a schematic circuit diagram of an apparatus according to the present invention.

Referring to the drawing, this shows an apparatus 10 for deterring birds. The apparatus has a clock generator 18 which applies output pulses of typically 0.5 Hz to the input of a binary divider 14. The divider 14 has seven outputs, four of which, 2, 4, 13 and 12, can be selectively connected to a sequence generator 16 by way of a switch SI. The output of the sequence generator is connected to a trigger circuit 20 which is tripped by an output pulse from the sequence generator 16 to actuate a relay RLI for a preselected period of time, typically between 10 and 25 seconds. The trigger circuit 20 may be formed by, for example, a monostable multivibrator. The relay RLI has two pairs of relay contacts, 24, 26. The relay contacts 26 control the power supply to a power amplifier 28 comprising a buffer circuit IC3 and transistors TR3 to TR6, whose output is connected to a loud speaker (not shown in the drawings) between terminals T5 and T6. The relay contacts 24 control via terminal T2 an auxiliary unit which may, for example, be a motor which rotates the loud speaker or alternatively a strobe light. Two of the remaining outputs 3 and 5 of the divider 14 are connected to two analogue gating circuits in IC1, each of which controls a respective voltage controlled oscillator in IC6. The output of one oscillator (the modulation oscillator) is connected to a frequency modulating input of the other oscillator (the carrier oscillator) and the output of the latter is connected to IC3 of the power amplifier 28. The frequency of each oscillator can be varied between 1 KHz and 30 KHz. The output 9 of the divider 14 is used solely for indication that the unit is "running" or in operation during daylight.

Referring to the analogue gating circuits in IC1, since these are identical, only one of the gating circuits is described in detail.

The gating circuit for the nodulation osicllator has two analogue gates each of which is connected in series with a respective resistance 44, 46. The series combination of each gating circuit and its associated resistance is connected in parallel with a further resistance 48 which is part of a resistance chain one end of which is coupled to a positive voltage supply and the other end of which is connected through a capacitance 50 to 0 volts. The junction of the resistance 48 and capacitance 50 is connected to the input of the oscillator 34.

One of the outputs, 5,3, of the binary divider 14 is connected to a control input of a first of the gates in each gating circuit while the other output 5,3 of the divider 14 is connected to the control input of the other gate of each gating circuit.

During operation of the circuit, the pulses applied to the gates of the analogue gating dircuits switch the resistances 44, 46 in and out of circuit in parallel with the resistances 48, thus varying the time constant of the two oscillators and therefore their output frequencies. The output of the modulation oscillator serves to frequency-modulate the output of the carrier oscillator by between 1 and 2 KHz.

The sequence generator 16 comprises two counters 60, 62 connected to count the output pulses from the binary divider 14, these being applied at input 64. Counter 60 counts the "units" while counter 62 counts the "tens".

Selected outputs of the counters 60, 62 are connected to selected inputs of gating circuits 66, 68. Each gating circuit comprises four NAND gates, the outputs of all of the gates being connected to the trigger circuit 20 by way of a common line 70. The interconnections between the outputs of the counters 60, 62 and the inputs of the gating circuits 66, 68 are chosen to provide a pseudo-random output on line 70. Each time a pulse appears on line 70 the trigger circuit 20 is tripped to activate relay 22 and supply power to the power amplifier 28. The latter in turn amplifies the signal fron the carrier oscillator and applies it to the loud speaker. The result is periodic bursts of sound from the loud speaker at intervals which are sufficiently random to prevent birds becoming used to the sound pattern.

The modulation oscillator also generates a sub-harmonic of typically between 10 -20 Hz which frequency modulates the carrier oscillator. This particular frequency range is below audio frequency range but is highly irritating to birds. It is believed that the body resonant frequency of birds generally lies in this range and it is for this reason that birds find it impossible to ignore the sound pattern generated by the apparatus.

Although the system can provide an output of between 1KHz and 30KHz, this is normally divided into two frequency ranges by use of different types of speakers. For a frequency range of 1KHz - 8.5KHz, a horn speaker is used to cover a large area, typically 50 acres and also for a more directional spread of sound. This lower frequency range is suited to larger birds and affects sound intercommunication between the birds. This has the affect of preventing alarm signals being passed from bird to bird as a result of which the birds appear to consider areas near the equipment to be unsafe.

The second range of frequencies is from 5KHz - 30KHz which is generated using smaller speakers. This frequency is less directional and is intended for smaller birds. It appears to have the affect of physiologically affecting the birds, in particular, by generating a standing wave whose dimension is similar to that of the birds cranium.

The speakers used with the preferred apparatus are ideally separate from the housing of the circuit to enable the relatively light speakers to be fitted on the tops of trees and the like, or on the top of poles with the circuit housing being positioned near the base for ease of access.

Claims

1. An apparatus for deterring birds or the like comprising means for generating a sound wave to provide a standing wave whose wave length is commensurate with a dimension of the cranial cavity of a bird.

2. An apparatus for deterring birds comprising means for generating an alternating signal (IC6)-;means for varying the frequency of said signal (IC6); electro-mechanical transducer means for converting said signal into sound wave; and control means (14,16) for controlling intermittent generation of said sound waves in a preselected or random manner.

3. Apparatus as claimed in claim 2 wherein said generating means comprises a first voltage controlled oscillator (IC6) and said frequency varying means comprises a second voltage controlled oscillator (IC6) operable to frequency modulate the output signal of said first oscillator.

4. Apparatus as claimed in claim 2 or 3 wherein said control means (14,16) conprises gate means (RL1) for controlling the application of said signal to said electro-mechanical transducer means and a sequence generator means (16) for generating a sequence of control signals for actuating said gate means in said preselected or random manner.

5. Apparatus as claimed in claim 4 wherein said gate means (RLI) is operable to control the supply of power to a power amplifier (28) for driving said electro-mechanical transducer means.

6. Apparatus as claimed in any of claims 2 to 5 wherein said control means (14,16) comprises means (14,IC1) for changing the frequency of said alternating signal in a step-wise, preselected manner.

7. Apparatus as claimed in claim 3 or any of claims 4 to 6 when appended to claim 3 wherein said control means (14,16) comprises means (14, IC1) for changing the frequency of at least one of said first and second oscillators (IC6) in a step-wise, preselected manner.

8. Apparatus as claimed in claim 7 wherein said means for changing said frequency comprises gate means (IC1) for controlling the application of tuning voltage to said at least one oscillator IIC6) and means (14) for actuating said gate means in a preselected manner.

9. Apparatus as claimed in any of claims 1 to 8 wherein said sound wave has a frequency in the range 1KHz - 8.5KHz.

10. Apparatus as claimed in any of claims 1 to 8 wherein said sound wave has a frequency in the range 5KHz - 30KHz.

11. Apparatus as claimed in claim 9 or 10 wherein said sound wave is frequency modulated by a frequency between 10-20Hz.

+12V SWITCHED

10

0 265 182

BAD ORIGINAL